# EUROPEAN PATENT SPECIFICATION

(11) **EP 2 868 185 B1**
(45) Date of publication and mention of the grant of the patent: **12.09.2018**
(21) Application number: 14190578.6
(22) Date of filing: 28.10.2014
(51) Int. Cl.: A01D 41/12, A01D 75/00

(54) **Auxiliary axle for an agricultural harvester during road transport**
Hilfsachse für eine landwirtschaftliche Erntemaschine während des Straßentransports
Essieu auxiliaire pour moissonneuse-batteuse pendant le transport routier

(30) Priority: 01.11.2013 US 201314070158; 19.11.2013 BE 201300776
(43) Date of publication of application: 06.05.2015
(73) Proprietor: CNH Industrial Belgium nv, 8210 Zedelgem (BE)
(72) Inventor: Baeckelandt, Gudrun, 8000 Brugge (BE); Carpentier, Michael, 8490 Varsenare (BE); Duquesne, Frank R. G., 8550 Zwevegem (BE); Somers, Tom N. N., 9880 Aalter (BE); Trowbridge, Jeffrey C., Stevens, Pennsylvania 17578 (US)
(74) Representative: CNH Industrial IP Department

(56) References cited:
- EP-A1- 1 269 825
- EP-A1- 2 168 425
- DE-A1-102008 044 486
- US-A1- 2006 150 605

## Description

### BACKGROUND OF THE INVENTION

The present invention relates to agricultural harvesters such as combines, and, more particularly, to heavy harvesters which utilize a deployable axle during road transport.

An agricultural vehicle known as a harvester "combine" is historically termed such because it combines multiple harvesting functions with a single harvesting unit, such as picking, threshing, separating and cleaning. A combine includes a header which removes the crop from a field, and a feeder housing which transports the crop matter into a threshing rotor. The threshing rotor rotates within a perforated housing, which may be in the form of adjustable concaves, and performs a threshing operation on the crop to remove the grain. Once the grain is threshed it falls through perforations in the concaves onto a grain pan. From the grain pan the grain is cleaned using a cleaning system, and is then transported to a grain tank onboard the combine. The cleaning system includes a cleaning fan which blows air through oscillating sieves to discharge chaff and other debris toward the rear of the combine. Non-grain crop material such as straw from the threshing section proceeds through a straw chopper and out the rear of the combine. When the grain tank becomes full, the combine is positioned adjacent a vehicle into which the grain is to be unloaded, such as a semi-trailer, gravity box, straight truck, or the like; and an unloading system on the combine is actuated to transfer the grain into the vehicle.

More particularly, a rotary threshing or separating system includes one or more rotors which can extend axially (front to rear) or transversely within the body of the combine, and which are partially or fully surrounded by a perforated concave. The crop material is threshed and separated by the rotation of the rotor within the concave. Coarser non-grain crop material such as stalks and leaves are transported to the rear of the combine and discharged back to the field. The separated grain, together with some finer non-grain crop material such as chaff, dust, straw, and other crop residue are discharged through the concaves and fall onto the grain pan where they are transported to the cleaning system. Alternatively, the grain and finer non-grain crop material may also fall directly onto the cleaning system itself.

The cleaning system further separates the grain from non-grain crop material, and typically includes a fan directing an air flow stream upwardly and rearwardly through vertically arranged sieves which oscillate in a fore and aft manner. The air flow stream lifts and carries the lighter non-grain crop material towards the rear end of the combine for discharge to the field. Clean grain, being heavier, and larger pieces of non-grain crop material, which are not carried away by the air flow stream, fall onto a surface of an upper sieve (also known as a chaffer sieve) where some or all of the clean grain passes through to a lower sieve (also known as a cleaning sieve). Grain and non-grain crop material remaining on the upper and lower sieves are physically separated by the reciprocating action of the sieves as the material moves rearwardly. Any grain and/or non-grain crop material remaining on the top surface of the upper sieve are discharged at the rear of the combine. Grain falling through the lower sieve lands on a bottom pan of the cleaning system, where it is conveyed forwardly toward a clean grain auger.

The clean grain auger is positioned below the lower sieve, and receives clean grain from each sieve and from the bottom pan of the cleaning system. The clean grain auger then augers the clean grain laterally sideways to a clean grain elevator, which in turn conveys the clean grain to a grain tank onboard the combine.

For total allowed axle weight requirements, a possible solution to meet European legislation is to use a third axle mounted under the feeder housing of larger harvesters. In road mode, this axle must be deployed in such a way as to provide a specified force onto the driving surface with the feeder housing at a specific height. The force is maintained by a hydraulic cylinder which is connected to the third axle.

DE 10 2008 044 486 A1 discloses a combine harvester with an additional support wheel connected to the feeder bottom via a hydraulic cylinder.

What is needed in the art is a large/heavy harvester which more consistently and reliably utilizes a deployable third axle for maximum allowable axle weight requirements during road transport.

### SUMMARY OF THE INVENTION

The present invention relates to a pivotally coupled and deployable axle, and the deployment sequence in which the combine goes into road transport mode. In one embodiment, the header is raised fully so that when the third axle is lowered, the supporting cylinder is allowed to extend completely. At that point, the hydraulic control valve applies a predetermined pressure to the accumulator until a steady pressure is obtained. Then a valve is closed to lock this fluid into the accumulator. The last step is to lower the feeder housing to the specific height which is sensed on the combine chassis. While the feeder is lowering, the pressure in the accumulator will increase because of the oil displacement from the support cylinder. Once the feeder is in its final position, the pressure in the hydraulic cylinder is such that the third axle provides the correct force on the road surface.

The invention in one form is directed to an agricultural harvester, including a chassis, a feeder housing pivotally mounted to the chassis, and an axle assembly pivotally mounted to the feeder housing. A hydraulic actuator is coupled with the axle assembly for pivotally moving the axle assembly in upward and downward directions from the feeder housing. A road mode switch provides a first output signal indicative of a field mode and a second output signal indicative of a road mode. A controller is coupled with the road mode switch and the hydraulic actuator. The controller receives the second output signal from the road mode switch and controls the hydraulic actuator, whereby the hydraulic actuator provides a substantially constant down force between the axle assembly and a ground surface.

The invention in another form is directed to a method of operating an agricultural harvester which includes a chassis, a feeder housing pivotally mounted to the chassis, and an axle assembly mounted to the feeder housing and including a wheel. The method includes the steps of:
selectively actuating a road mode switch corresponding to a field mode or a road mode, the road mode switch providing a first output signal indicative of a field mode and a second output signal indicative of a road mode; and
controlling a deployment of the axle assembly by pivoting the axle assembly from a field position to a transport position using a hydraulic actuator, when the road mode switch is actuated for the road mode, whereby the actuator provides a substantially constant down force between the wheel and a ground surface.

An advantage of the present invention is that a constant down force is applied between the axle assembly and ground surface when in a road mode, regardless of surface irregularities of the ground surface.

The described sequence improves safety by guaranteeing that the road mode is not enabled unless the axle assembly is properly deployed.

### BRIEF DESCRIPTION OF THE DRAWINGS

The above-mentioned and other features and advantages of this invention, and the manner of attaining them, will become more apparent and the invention will be better understood by reference to the following description of an embodiment of the invention taken in conjunction with the accompanying drawings, wherein:
Fig. 1 is a side view of an embodiment of an agricultural harvester in the form of a combine which includes an embodiment of a deployable axle assembly of the present invention;
Fig. 2 is a side view of the feeder housing shown in Fig. 1, with the deployable axle assembly in a retracted state for field operation;
Fig. 3 is a side view of the feeder housing shown in Figs. 1 and 2, with the deployable axle assembly in an extended state for road transport;
Figs. 4 and 5 are perspective views of the axle assembly shown in Figs. 1-3;
Fig. 6 is a bottom view of the axle assembly shown in Figs. 1-5;
Fig. 7 is a side view of the axle assembly shown in a retracted position;
Fig. 8 is a side view of the axle assembly shown in a partially extended position contacting the road surface;
Fig. 9 is a side view of the axle assembly shown in a fully extended position contacting the road surface;
Fig. 10 is a fragmentary bottom perspective view of axle assembly attached to the bottom of the feeder housing;
Fig. 11 is a schematic illustration of a hydraulic circuit which can be used with the axle assembly of the present invention;
Fig. 12 is a schematic side view with the axle assembly shown in a deployed position and the feeder housing in a fully raised position, such that the axle assembly does not contact the road surface;
Fig. 13 is a schematic side view with the axle assembly shown in a deployed position and the feeder housing in a lowered position, such that the axle assembly contacts the road surface;
Figs. 14A and 14B are a flow chart illustrating the control logic for deploying the axle assembly and placing the harvester in a road mode; and
Fig. 15 is a flow chart illustrating the control logic for retracting the axle assembly and placing the harvester in a field mode.

Corresponding reference characters indicate corresponding parts throughout the several views. The exemplification set out herein illustrates one embodiment of the invention, in one form, and such exemplification is not to be construed as limiting the scope of the invention in any manner.

### DETAILED DESCRIPTION OF THE INVENTION

The terms "grain", "straw" and "tailings" are used principally throughout this specification for convenience but it is to be understood that these terms are not intended to be limiting. Thus "grain" refers to that part of the crop material which is threshed and separated from the discardable part of the crop material, which is referred to as non-grain crop material, MOG or straw. Incompletely threshed crop material is referred to as "tailings". Also the terms "forward", "rearward", "left" and "right", when used in connection with the agricultural harvester and/or components thereof are usually determined with reference to the direction of forward operative travel of the harvester, but again, they should not be construed as limiting. The terms "longitudinal" and "transverse" are determined with reference to the fore-and-aft direction of the agricultural harvester and are equally not to be construed as limiting.

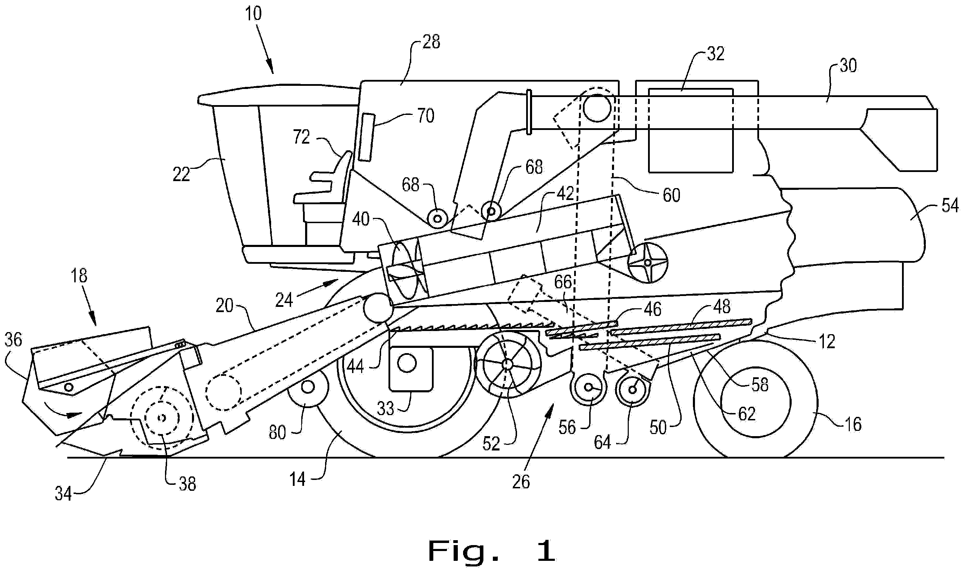

Referring now to the drawings, and more particularly to Fig. 1, an agricultural harvester is shown in the form of a combine 10, but could be a different type of harvester, depending on the need or application. Combine 10 generally includes a chassis 12, ground engaging wheels 14 and 16, header 18, feeder housing 20, an operator station with a cab 22, threshing and separating system 24, cleaning system 26, grain tank 28, and unloading auger 30.

In the illustrated embodiment, front wheels 14 are larger flotation type wheels, and rear wheels 16 are smaller steerable wheels. Motive force is selectively applied to front wheels 14 through a power plant in the form of a diesel engine 32 and a transmission (not shown) driven by engine 32.

Header 18 is mounted to the front of combine 10 and includes a cutter bar 34 for severing crops from a field during forward motion of combine 10. A rotatable reel 36 feeds the crop into header 18, and a double auger 38 feeds the severed crop laterally inwardly from each side toward feeder housing 20. Feeder housing 20 conveys the cut crop to threshing and separating system 24, and is selectively vertically movable using appropriate actuators, such as hydraulic cylinders (not shown). Header 18 may also be differently configured, such as a multi-row corn header.

Threshing and separating system 24 is of the axial-flow type, and generally includes a rotor 40 at least partially enclosed by and rotatable within a corresponding perforated concave 42. The cut crops are threshed and separated by the rotation of rotor 40 within concave 42, and larger elements, such as stalks, leaves and the like are discharged from the rear of combine 10. Smaller elements of crop material including grain and non-grain crop material, including particles lighter than grain, such as chaff, dust and straw, are discharged through perforations of concave 42. Threshing and separating system 24 can also be a different type of system, such as a system with a transverse rotor rather than an axial rotor, etc.

Grain which has been separated by the threshing and separating assembly 24 falls onto a grain pan 44 and is conveyed toward cleaning system 26. Cleaning system 26 may include an optional pre-cleaning sieve 46, an upper sieve 48 (also known as a chaffer sieve), a lower sieve 50 (also known as a cleaning sieve), and a cleaning fan 52. Grain on sieves 46, 48 and 50 is subjected to a cleaning action by fan 52 which provides an air flow through the sieves to remove chaff and other impurities such as dust from the grain by making this material airborne for discharge from straw hood 54 of combine 10. Grain pan 44 and pre-cleaning sieve 46 oscillate in a fore-to-aft manner to transport the grain and finer non-grain crop material to the upper surface of upper sieve 48. Upper sieve 48 and lower sieve 50 are vertically arranged relative to each other, and likewise oscillate in a fore-to-aft manner to spread the grain across sieves 48, 50, while permitting the passage of cleaned grain by gravity through the openings of sieves 48, 50.

Clean grain falls to a clean grain auger 56 positioned crosswise below and toward the front of lower sieve 50. Clean grain auger 56 receives clean grain from each sieve 48, 50 and from bottom pan 58 of cleaning system 26. Clean grain auger 56 conveys the clean grain laterally to a generally vertically arranged grain elevator 60 for transport to grain tank 28. Tailings from cleaning system 26 fall to a tailings auger trough 62. The tailings are transported via tailings auger 64 and return auger 66 to the upstream end of cleaning system 26 for repeated cleaning action. A pair of grain tank augers 68 at the bottom of grain tank 28 convey the clean grain laterally within grain tank 28 to unloading auger 30 for discharge from combine 10.

Combine 10 also includes one or more onboard electrical controllers 70 which control various functions onboard combine 10. Combine 10 is shown with a single controller 70 positioned at the rear of cab 22; however, the number and placement of the controllers can vary depending on the particularly configured combine. Controller 70 receives input signals corresponding to various operator selected functions, and then controls various mechanical components onboard combine 10 corresponding to the operator selected functions. Controller 70 can also receive input signals from various sensors onboard combine 10, and controls various mechanical components onboard combine 10 based on the sensor output signals.

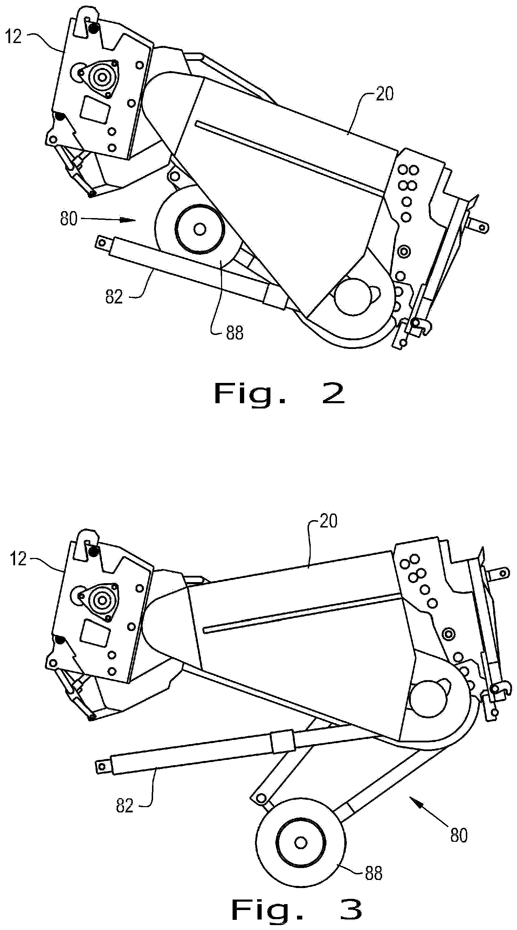

Referring now to Figs. 1-3, conjunctively, combine 10 also includes a deployable auxiliary axle assembly 80 which is selectively deployable between an upward or field position (Fig. 2) and a downward or road position (Fig. 3). Auxiliary axle assembly 80 is pivotally coupled to a bottom of feeder housing 20 and generally functions to add an axle assembly and thereby distribute the weight load of combine 10 when in a transport or road mode. A pair of lift cylinders 82 interconnecting between either side of feeder housing 20 and the chassis 12 of combine 10 are used to raise the feeder housing 20 up and down, and an additional hydraulic cylinder (not specifically shown in Figs. 2 and 3) is used to raise and lower the auxiliary axle assembly 80.

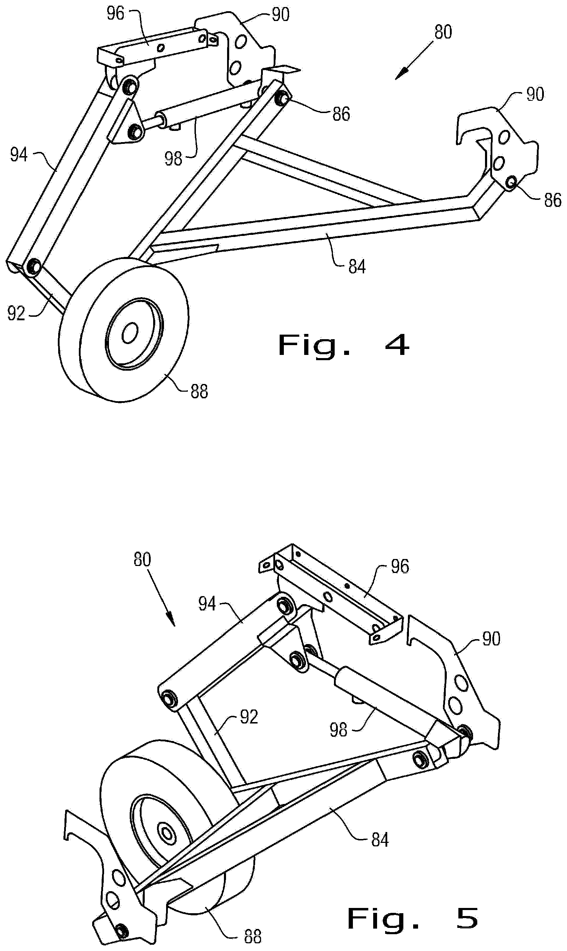

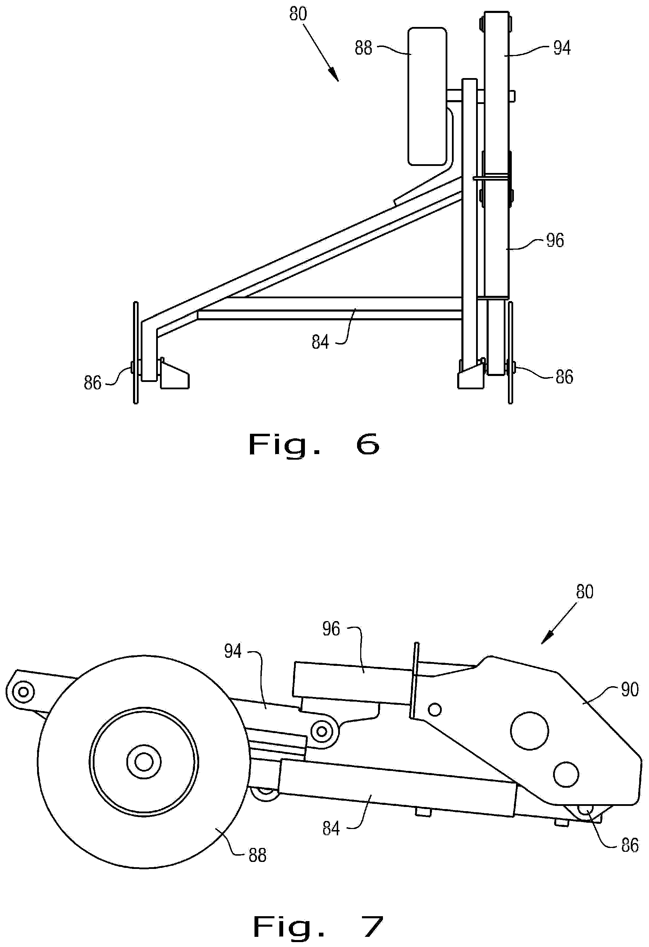

Referring now to Figs. 4-10, axle assembly 80 includes a frame 84, a pair of pivot points 86 toward a forward end of frame 84, and a wheel 88 toward a rearward end of frame 84. Frame 84 has a generally triangular shape, with the pivot points 86 at the forward end being connected with mounting plates 90 which are attached to the feeder housing 20. Wheel 88 is mounted to the rearward apex of the frame 84 using a suitable wheel hub mounting arrangement. Although axle assembly 80 is shown with only a single wheel 88, it is also to be understood that it is possible to use more than one wheel on axle assembly 80 for some applications. An upstanding frame member 92 is pivotally mounted to the rearward apex of frame 84. A linkage 94 is connected to the top end of upstanding frame member 92, and also connected with a mounting bracket 96 which is attached to the bottom of feeder housing 20. A hydraulic actuator in the form of a hydraulic cylinder 98 interconnects between frame 84 and linkage 94, and selectively moves the axle assembly 80 from the field position to the road position, or vice versa.

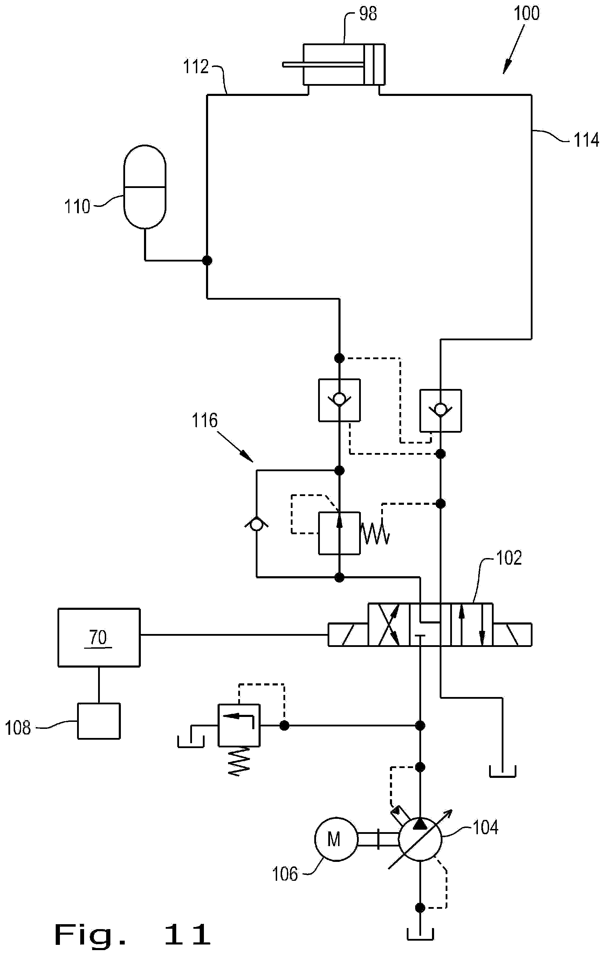

Fig. 11 is a schematic illustration of an exemplary hydraulic circuit 100 used to control the deployable axle assembly 80 shown in Figs. 4-10. A two-way valve 102 is fluidly connected between hydraulic cylinder 98 and a fluid pressure source, in this illustration shown in the form of a pump 104 driven by a motor 106. Valve 102 is coupled with and controlled by controller 70 to provide two-way operation of hydraulic cylinder 98. Controller 70 is also coupled with a road mode switch 108 which is preferably placed within operator cab 22 so as to be easily actuated by an operator. A hydraulic accumulator 110 is fluidly coupled between the valve 102 and hydraulic cylinder 98, preferably on the retract side of hydraulic cylinder 98, as shown. A pressure relief valve 116 is placed between the valve 102 and the accumulator 110. Accumulator 110 is directly connected with hydraulic cylinder 98 via fluid line 112, and thus the pressure, as defined by the pressure relief valve 116, is the same between accumulator 110 and hydraulic cylinder 98.

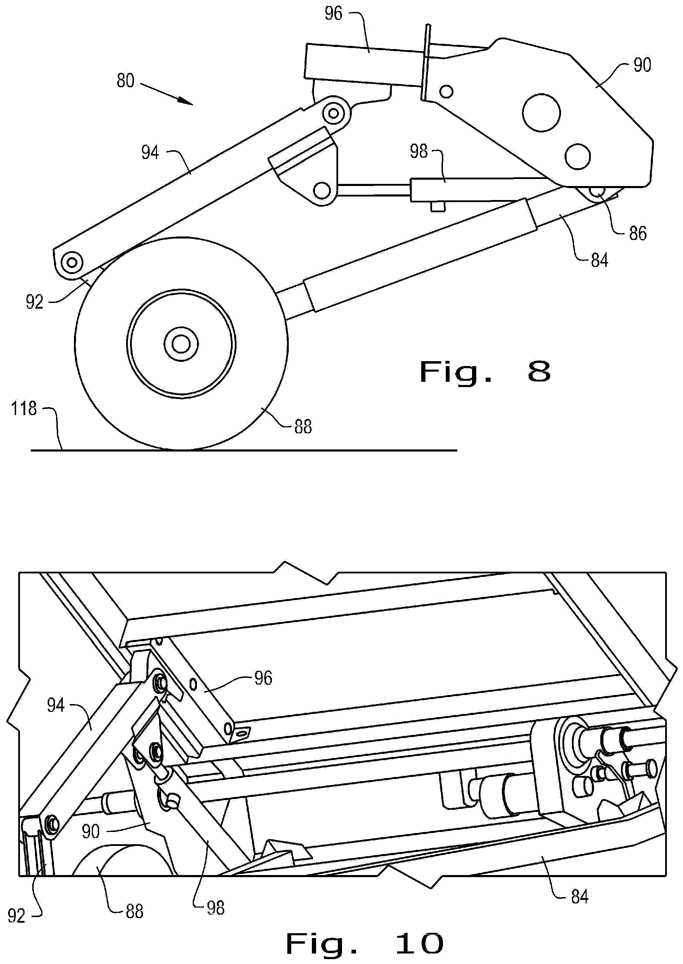

It should be noted as shown in Fig 8 that the geometry of the linkage system as defined by frame members 90 and 96, pivot frame 84, connecting rod 92 and linkage 94 combined with the hydraulic cylinder 98 is such that the relation between hydraulic pressure on the rod side of cylinder 98 and the resulting axle force on the ground surface is more or less linear.

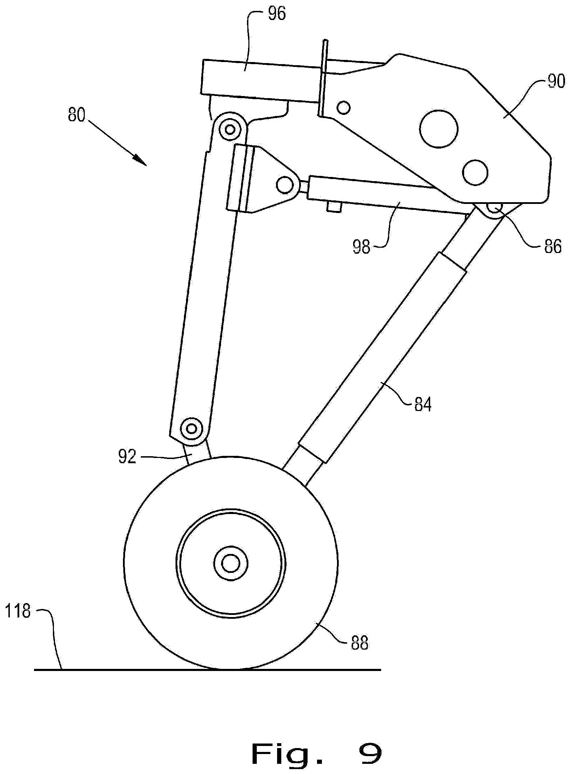

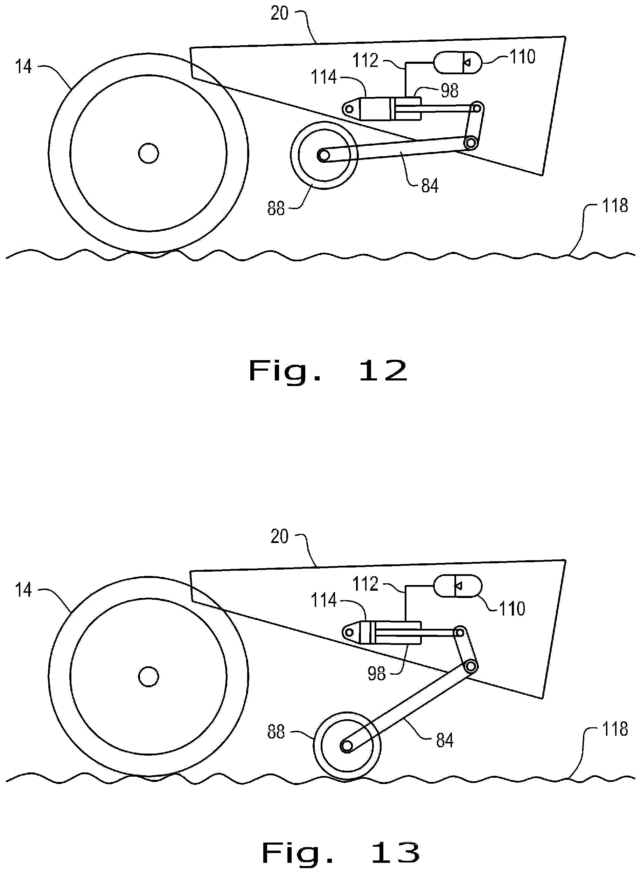

Figs. 12 and 13 schematically illustrate the deployment sequence for the embodiment of auxiliary axle assembly 80 in figures 8 and 9. When an operator presses the road mode switch 108 (Fig. 11), the controller 70 determines whether an auxiliary axle assembly 80 is present onboard the combine 10, and if so, deploys the axle assembly 80. First, the feeder housing 20 is set to a predetermined position. Then the axle assembly 80 is fully deployed by retracting the hydraulic cylinder 98. With the wheel 88 positioned above the ground surface 118, valve 102 (Fig. 11) is operated under control of controller 70 to lower the axle assembly till the wheel(s) are touching the ground. From that point onwards the cylinder stops retracting and the accumulator 110 is charged to a predetermined fluid pressure as set by pressure control valve 116. After a predetermined time interval the valve 102 is closed. The wheel(s) 88 on the axle assembly 84 contact the ground surface 118 with a well-defined load as defined through the cylinder/linkage geometry and the pressure in the accumulator 110. This substantially constant down pressure occurs even with the occurrence of bumps, potholes or the like, as the combine 10 traverses over the ground surface. In an alternative deployment the feeder housing 20 can be raised to full height position, followed by lowering the axle 88 and then lower the feeder housing 20 to the required road transport height.

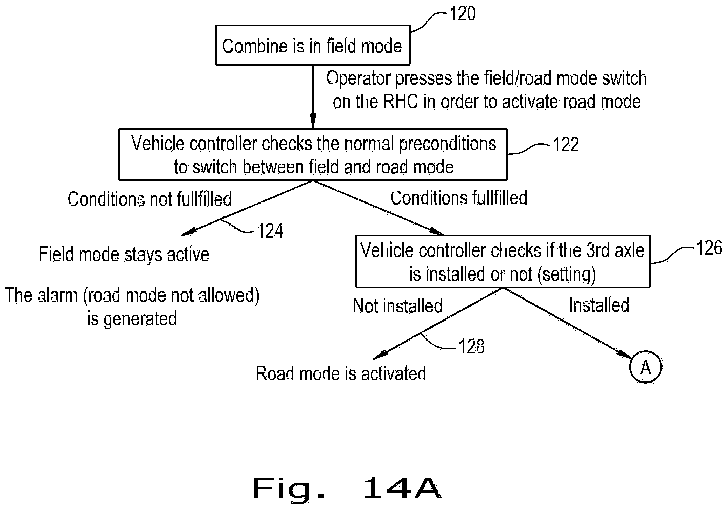

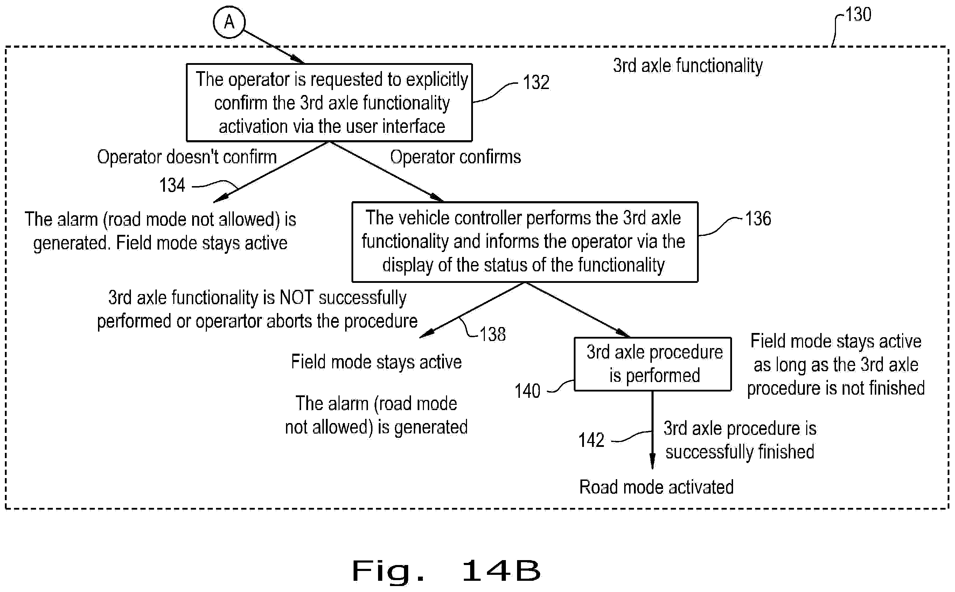

Figs. 14A and 14B are a flowchart illustrating the deployment sequence of auxiliary axle assembly 80 in more detail. Prior to depressing the road mode switch 108, the combine 10 is in a field mode for field operation of combine 10 (step 120). When an operator depresses the road mode switch 108, an output signal is sent to controller 70 which effects an interlock for a number of mechanical functions on combine 10. For example, the header 18 and threshing and separating system 24 can be interlocked to prevent operation thereof during the road mode. Moreover, it is possible to prevent unloading auger 30 from swinging laterally outward to the unloading position during the road mode. The controller 70 checks the normal preconditions to switch between the field mode and the road mode when the road mode switch 108 is depressed (step 122). If the normal preconditions are not met, then the field mode stays active (line 124). On the other hand, if the normal preconditions are met, then the controller 70 also determines if the auxiliary axle assembly 80 is present onboard combine 10 (step 126). If the normal preconditions are met and no auxiliary axle assembly 80 is present, then the road mode is activated for combine 10 (line 128).

If the normal preconditions are met and an auxiliary axle assembly 80 is present on board combine 10, then the auxiliary axle assembly 80 is deployed using the methodology set forth within the dashed box 130. First, the operator is requested to explicitly confirm that the auxiliary axle assembly 80 is to be deployed (step 132). If the operator does not confirm the axle deployment, either through an explicit denial of the deployment or failure to confirm the deployment, then the road mode is not allowed and an alarm is generated (line 134). On the other hand, if the operator confirms the deployment of the auxiliary axle assembly 80, then the controller 70 deploys the axle assembly 80 in a manner as described above with reference to Figs. 12 and 13. During and/or after the deployment sequence, the operator is informed of the deployment status using any convenient display such as a video display, etc (step 136). If the auxiliary axle assembly 80 is not successfully deployed or the operator aborts the deployment sequence, then the combine 10 remains within the field mode and an alarm is generated (line 138). Alternatively, if the auxiliary axle assembly 80 is successfully deployed (step 140), then the road mode is activated for combine 10 (line 142).

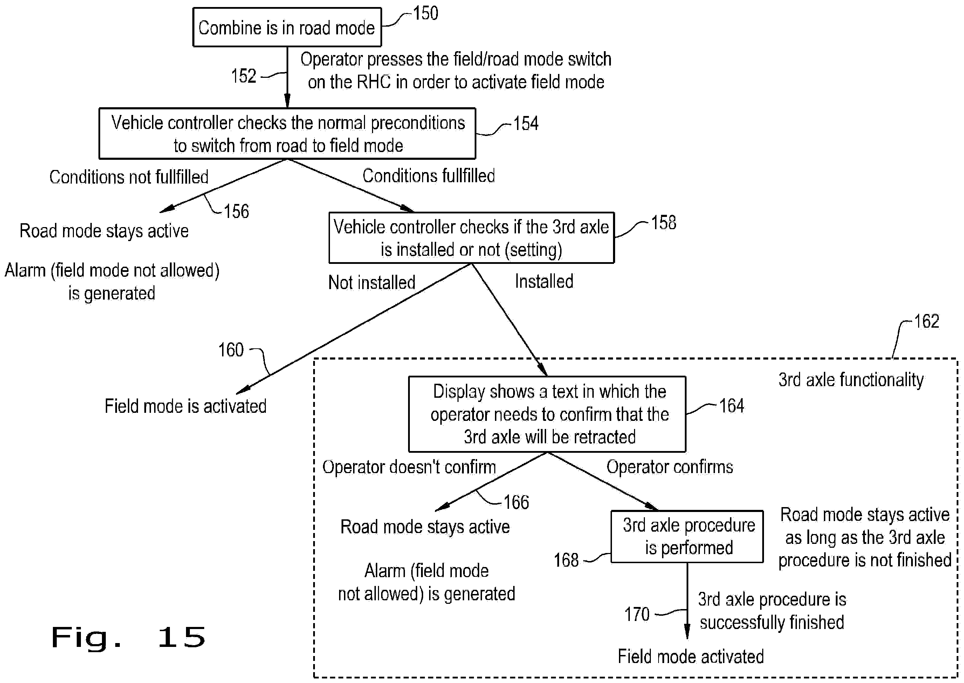

Fig. 15 is a flowchart illustrating the controlled movement of the auxiliary axle assembly 80 from the road mode to the field mode. Prior to depressing the road mode switch 108, the combine 10 is in a road mode for transport of combine 10 over a ground surface (step 150). When an operator depresses the road mode switch 108, an output signal is sent to controller 70 which indicates that the operator desires to transform the combine 10 from a road mode to a field mode (line 152). Controller 70 then checks for the normal preconditions to switch combine 10 from the road mode to the field mode (step 154). If the normal preconditions are not met, then the combine 10 stays in the active road mode (line 156). On the other hand, if the normal preconditions are met, then the controller 70 determines whether an auxiliary axle assembly 80 is present onboard combine 10 (step 158). If an auxiliary axle assembly 80 is not determined to be present onboard combine 10, then the field mode is activated (line 160).

If the normal preconditions for changing to the field mode are met, and an auxiliary axle assembly 80 is determined to be present onboard combine 10, then the auxiliary axle assembly 80 is moved from the road (extended) position to the field (retracted) position using the methodology set forth within the dashed box 162. First, the operator is requested to explicitly confirm that the auxiliary axle assembly 80 is to be retracted to the field position (step 164). If the operator does not confirm the axle retraction to the field position, either through an explicit denial of the retraction or failure to confirm the retraction, then the road mode stays active and an alarm is generated (line 166). On the other hand, if the operator confirms the retraction of the auxiliary axle assembly 80, then the controller 70 retracts the axle assembly 80 to the field position (step 168) and the field mode is activated (line 170).

## Claims

1. An agricultural harvester (10) includes a chassis (12) and a feeder housing (20) pivotally mounted to the chassis (12), the agricultural harvester (10) comprising:
an axle assembly (80) pivotally mounted to the feeder housing (20), the axle assembly (80) including a wheel (88); and
a hydraulic actuator (98) coupled with the axle assembly (80) for pivotally moving the wheel (88) in upward and downward directions from the feeder housing (20);
**characterized in that** the agricultural harvester (10) further comprises a road mode switch (108) providing a first output signal indicative of a field mode and a second output signal indicative of a road mode; and
a controller (70) coupled with each of the road mode switch (108) and the hydraulic actuator (98), the controller (70) receiving the second output signal from the road mode switch (108) and controlling the hydraulic actuator (98), whereby the hydraulic actuator (98) provides a substantially constant down force between the wheel (88) and a ground surface (118).

2. The agricultural harvester (10) of claim 1, further including a hydraulic accumulator (110) fluidly coupled with the hydraulic actuator (98).

3. The agricultural harvester (10) of claim 2, wherein the controller (70) is operative to effect the substantially constant down force utilizing a deployment sequence for the axle assembly (80) including:
raising the feeder housing (20) to a predetermined position;
controlling the hydraulic actuator (98) to pivot the wheel (88) downward toward the ground surface (118);
fluidly closing the hydraulic actuator (98) and the accumulator (110) at a substantially same pressure therebetween; and
lowering the feeder housing (20) until a predetermined fluid pressure is obtained within the accumulator (110).

4. The agricultural harvester (10) of claim 3, wherein the axle assembly (80) does not contact the ground surface (118) when pivoted downward by the hydraulic actuator (98) during the deployment sequence.

5. The agricultural harvester (10) of claim 4, wherein the axle assembly (80) contacts the ground surface (118) when the feeder housing (20) is lowered.

6. The agricultural harvester (10) of claim 3, wherein the predetermined position of the feeder housing (20) is a fully raised position.

7. The agricultural harvester (10) of claim 3, wherein the controller (70) is operable to determine if the axle assembly (80) is present on board the harvester (10), and to only allow the road mode to occur if the deployment sequence is properly carried out (140).

8. The agricultural harvester (10) of claim 3, wherein the controller (70) is operative to fluidly close the hydraulic actuator (98) and the hydraulic accumulator (110) by closing a valve (102) between the accumulator (110) and a fluid pressure source (104).

9. The agricultural harvester (10) of claim 1, wherein the axle assembly (80) includes a frame (84) and at least one pivot point (86) at a forward end of the frame (84), and the at least one wheel (88) is positioned at a rearward end of the frame (84), the at least one pivot point (86) pivotally coupling the frame (84) with the feeder housing (20).

10. The agricultural harvester (10) of claim 9, wherein the at least one pivot point (86) pivotally couples the frame (84) with a bottom of the feeder housing (20).

11. The agricultural harvester (10) of claim 10, further including at least one mounting bracket (96), each the mounting bracket (96) interconnecting the frame (84) with the bottom of the feeder housing (20) at a corresponding the pivot point (86).

12. The agricultural harvester (10) of claim 1, wherein the road mode switch (108) functions as an interlock for a number of mechanical functions on the agricultural harvester (10) when actuated.

13. The agricultural harvester (10) of claim 1, wherein the agricultural harvester (10) is a combine harvester (10).

14. A method of operating an agricultural harvester (10), the harvester (10) having a chassis (12), a feeder housing (20) pivotally mounted to the chassis (12), and an axle assembly (80) mounted to the feeder housing (20) and including a wheel (88), the method comprising the steps of:
selectively actuating a road mode switch (108) corresponding to a field mode or a road mode, the road mode switch (108) providing a first output signal indicative of a field mode and a second output signal indicative of a road mode; and
controlling a deployment of the axle assembly (80) by pivoting the axle assembly (80) from a field position to a transport position using a hydraulic actuator (98), when the road mode switch (108) is actuated for the road mode, whereby the hydraulic actuator (98) provides a substantially constant down force between the wheel (88) and a ground surface (118).

15. The method of claim 14, wherein the hydraulic actuator (98) is fluidly coupled to a hydraulic accumulator (110), and wherein the controlled deployment of the axle assembly (80) includes a deployment sequence of:
raising the feeder housing (20) to a predetermined position;
controlling the hydraulic actuator (98) to pivot the wheel (88) downward toward the ground surface (118);
fluidly closing the hydraulic actuator (98) and the hydraulic accumulator (110) at a substantially same pressure therebetween; and
lowering the feeder housing (20) until a predetermined fluid pressure is obtained within the hydraulic accumulator (110).

## Patentansprüche

1. Landwirtschaftliche Erntemaschine (10) mit einem Fahrgestell (12) und einem Zuführergehäuse (20), das schwenkbar am Fahrgestell (12) befestigt ist, wobei die landwirtschaftliche Erntemaschine (10) aufweist:
eine Radachsanordnung (80), die schwenkbar am Zuführergehäuse (20) befestigt ist, wobei die Radachsanordnung (80) ein Rad (88) aufweist; und
ein hydraulisches Betätigungselement (98), das mit der Radachsanordnung (80) gekoppelt ist, um das Rad (88) vom Zuführergehäuse (20) schwenkbar nach oben und unten zu bewegen;
**dadurch gekennzeichnet, dass** die landwirtschaftliche Erntemaschine (10) außerdem einen Straßenmodus-Schalter (108) aufweist, der ein erstes Ausgangssignal, das indikativ für einen Feldmodus ist, und ein zweites Ausgangssignal, das indikativ für einen Straßenmodus ist, bereitstellt; und
eine Steuerung (70), die sowohl mit dem Straßenmodus-Schalter (108) als auch mit dem hydraulischen Betätigungselement (98) gekoppelt ist, wobei die Steuerung (70) das zweite Ausgangssignal vom Straßenmodus-Schalter (108) entgegennimmt und das hydraulische Betätigungselement (98) steuert, wobei das hydraulische Betätigungselement (98) eine im Wesentlichen konstante, nach unten gerichtete Kraft zwischen dem Rad (88) und einer Bodenoberfläche (118) liefert.

2. Landwirtschaftliche Erntemaschine (10) nach Anspruch 1, des Weiteren mit einem hydraulischen Akkumulator (110), der in Strömungsverbindung mit dem hydraulischen Betätigungselement (98) ist.

3. Landwirtschaftliche Erntemaschine (10) nach Anspruch 2, wobei die Steuerung (70) betätigbar ist, um die im Wesentlichen konstante, nach unten gerichtete Kraft unter Verwendung einer Anwendungssequenz für die Radachsanordnung (80) mit folgenden Schritten zu bewirken:
Anheben des Zuführergehäuses (20) in eine vorbestimmte Position;
Steuern des hydraulischen Betätigungselements (98), um das Rad (88) in Richtung der Bodenoberfläche (118) nach unten zu schwenken.
Schließen des hydraulischen Betätigungselements (98) und des Akkumulators (110) hinsichtlich Strömungen bei einem im Wesentlichen gleichen Druck zwischen diesen; und
Absenken des Zuführergehäuses (20), bis ein vorbestimmter Fluiddruck innerhalb des Akkumulators (110) erhalten wird.

4. Landwirtschaftliche Erntemaschine (10) nach Anspruch 3, wobei die Radachsanordnung (80) die Bodenoberfläche (118) nicht berührt, wenn sie während der Anwendungssequenz vom hydraulischen Betätigungselement (98) nach unten geschwenkt wird.

5. Landwirtschaftliche Erntemaschine (10) nach Anspruch 4, wobei die Radachsanordnung (80) die Bodenoberfläche (118) berührt, wenn das Zuführergehäuse (20) abgesenkt wird.

6. Landwirtschaftliche Erntemaschine (10) nach Anspruch 3, wobei die vorbestimmte Position des Zuführergehäuses (20) eine vollständig angehobene Position ist.

7. Landwirtschaftliche Erntemaschine (10) nach Anspruch 3, wobei die Steuerung (70) betätigbar ist, um zu bestimmen, ob die Radachsanordnung (80) an Bord der Erntemaschine (10) vorhanden ist, und um den Straßenmodus nur dann auftreten zu lassen, wenn die Anwendungssequenz korrekt ausgeführt wird (140).

8. Landwirtschaftliche Erntemaschine (10) nach Anspruch 3, wobei die Steuerung (70) betätigbar ist, um das hydraulische Betätigungselement (98) und den hydraulischen Akkumulator (110) strömungstechnisch zu schließen, indem ein Ventil (102) zwischen dem Akkumulator (110) und einer Fluiddruckquelle (104) geschlossen wird.

9. Landwirtschaftliche Erntemaschine (10) nach Anspruch 1, wobei die Radachsanordnung (80) einen Rahmen (84) und wenigstens einen Schwenkpunkt (86) an einem vorderen Ende des Rahmens (84) umfasst, und wobei das wenigstens eine Rad (88) an einem hinteren Ende des Rahmens (84) angeordnet ist, wobei der wenigstens eine Schwenkpunkt (86) den Rahmen (84) schwenkbar mit dem Zuführergehäuse (20) koppelt.

10. Landwirtschaftliche Erntemaschine (10) nach Anspruch 9, wobei der wenigstens eine Schwenkpunkt (86) den Rahmen (84) mit einem Boden des Zuführergehäuses (20) schwenkbar koppelt.

11. Landwirtschaftliche Erntemaschine (10) nach Anspruch 10, des Weiteren mit wenigstens einem Befestigungsträger (96), wobei jeder Befestigungsträger (96) den Rahmen (84) mit dem Boden des Zuführergehäuses (20) an einem entsprechenden Schwenkpunkt (86) verbindet.

12. Landwirtschaftliche Erntemaschine (10) nach Anspruch 1, wobei der Straßenmodus-Schalter (108) als eine Verriegelung für eine Anzahl mechanischer Funktionen an der landwirtschaftlichen Erntemaschine (10) fungiert, wenn er aktiviert ist.

13. Landwirtschaftliche Erntemaschine (10) nach Anspruch 1, wobei die landwirtschaftliche Erntemaschine (10) ein Mähdrescher (10) ist.

14. Verfahren zum Betreiben einer landwirtschaftlichen Erntemaschine (10), wobei die Erntemaschine (10) ein Fahrgestell (12), ein Zuführergehäuse (20), das schwenkbar am Fahrgestell (12) befestigt ist, und eine Radachsanordnung (80), die am Zuführergehäuse (20) befestigt ist und ein Rad (88) umfasst, aufweist, wobei das Verfahren folgende Schritte aufweist:
selektives Betätigen eines Straßenmodus-Schalters (108) entsprechend einem Feldmodus oder einem Straßenmodus, wobei der Straßenmodus-Schalter (108) ein erstes Ausgangsignal, das indikativ für einen Feldmodus ist, und ein zweites Ausgangssignal, das indikativ für einen Straßenmodus ist, bereitstellt; und
Steuern einer Verwendung der Radachsanordnung (80) durch Schwenken der Radachsanordnung (80) von einer Feldposition zu einer Transportposition unter Verwendung eines hydraulischen Betätigungselements (98), wenn der Straßenmodus-Schalter (108) für den Straßenmodus aktiviert wird, wobei das hydraulische Betätigungselement (98) eine im Wesentlichen konstante, nach unten gerichtete Kraft zwischen dem Rad (88) und einer Bodenoberfläche (118) liefert.

15. Verfahren nach Anspruch 14, wobei das hydraulische Betätigungselement (98) in Strömungsverbindung mit einem hydraulischen Akkumulator (110) ist, und wobei die gesteuerte Verwendung der Radachsanordnung (80) eine Anwendungssequenz mit folgenden Schritten umfasst:
Anheben des Zuführergehäuses (20) in eine vorbestimmte Position;
Steuern des hydraulischen Betätigungselements (98), um das Rad (88) nach unten in Richtung der Bodenoberfläche (118) zu schwenken;
Schließen des hydraulischen Betätigungselements (98) und des hydraulischen Akkumulators (110) hinsichtlich Strömungen bei einem im Wesentlichen gleichen Druck zwischen diesen; und
Absenken des Zuführergehäuses (20), bis ein vorbestimmter Fluiddruck innerhalb des hydraulischen Akkumulators (110) erhalten wird.

## Revendications

1. Machine de récolte agricole (10) incluant un châssis (12) et un caisson d'alimentation (20) monté de façon pivotante sur le châssis (12), la machine de récolte agricole (10) comprenant:
un ensemble d'essieu (80) monté de façon pivotante sur le caisson d'alimentation (20), l'ensemble d'essieu (80) incluant une roue (88), et
un actionneur hydraulique (98) couplé à l'ensemble d'essieu (80) pour déplacer de façon pivotante la roue (88) dans des directions vers le haut et vers le bas à partir du caisson d'alimentation (20),
**caractérisée en ce que** la machine de récolte agricole (10) comprend en outre un commutateur de mode roue (108) fournissant un premier signal de sortie indiquant un mode de champ et un second signal de sortie indiquant un mode de roue, et
un dispositif de commande (70) couplé au commutateur de mode route (108) et à l'actionneur hydraulique (98), le dispositif de commande (70) recevant le second signal de sortie du commutateur de mode route (108) et commandant l'actionneur hydraulique (98), au moyen de quoi l'actionneur hydraulique (98) fournit une force vers le bas sensiblement constante entre la roue (88) et la surface du sol (118).

2. Machine de récolte agricole (10) selon la revendication 1, comprenant en outre un accumulateur hydraulique (110) couplé fluidiquement à l'actionneur hydraulique (98).

3. Machine de récolte agricole (10) selon la revendication 2, dans laquelle le dispositif de commande (70) est fonctionnel pour engendrer une force vers le bas sensiblement constante en utilisant une séquence de déploiement pour l'ensemble d'essieu (80) incluant les opérations suivantes consistant à :
lever le caisson d'alimentation (20) jusqu'à une position prédéterminée,
commander l'actionneur hydraulique (98) pour pivoter la roue (88) vers le bas vers la surface du sol (118),
fermer fluidiquement l'actionneur hydraulique (98) et l'accumulateur (110) à une pression sensiblement identique entre eux, et
abaisser le caisson d'alimentation (20) jusqu'à ce qu'une pression de fluide prédéterminée soit obtenue à l'intérieur de l'accumulateur (110).

4. Machine de récolte agricole (10) selon la revendication 3, dans laquelle l'ensemble d'essieu (80) n'entre pas en contact avec la surface du sol (118) lorsqu'il est pivoté vers le bas par l'actionneur hydraulique (98) pendant la séquence de déploiement.

5. Machine de récolte agricole (10) selon la revendication 4, dans laquelle l'ensemble d'essieu (80) entre en contact avec la surface du sol (118) lorsque le caisson d'alimentation (20) est abaissé.

6. Machine de récolte agricole (10) selon la revendication 3, dans laquelle la position prédéterminée du caisson d'alimentation (20) est une position entièrement levée.

7. Machine de récolte agricole (10) selon la revendication 3, dans laquelle le dispositif de commande (70) est fonctionnel pour déterminer si l'ensemble d'essieu (80) est présent à bord de la machine de récolte (10), et pour permettre uniquement au mode de route de se mettre en place si la séquence de déploiement est correctement réalisée (140).

8. Machine de récolte agricole (10) selon la revendication 3, dans laquelle le dispositif de commande (70) est fonctionnel pour fermer fluidiquement l'actionneur hydraulique (98) et l'accumulateur hydraulique (110) en fermant une soupape (102) entre l'accumulateur (110) et une source de fluide sous pression (104).

9. Machine de récolte agricole (10) selon la revendication 1, dans laquelle l'ensemble d'essieu (80) comprend un cadre (84) et au moins un point de pivotement (86) à une extrémité avant du cadre (84), et la au moins une roue (88) est positionnée à une extrémité arrière du cadre (84), le au moins un point de pivotement (86) couplant de façon pivotante le cadre (84) au caisson d'alimentation (20).

10. Machine de récolte agricole (10) selon la revendication 9, dans laquelle le au moins un point de pivotement (86) couple de façon pivotante le cadre (84) à un fond du caisson d'alimentation (20).

11. Machine de récolte agricole (10) selon la revendication 10, comprenant en outre au moins une potence de montage (96), chaque potence de montage (96) interconnectant le cadre (84) au fond du caisson d'alimentation (20) au niveau d'un point de pivotement correspondant (86).

12. Machine de récolte agricole (10) selon la revendication 1, dans laquelle le commutateur de mode route (108) fonctionne comme un interverrouillage pour un certain nombre de fonctions mécaniques sur la machine de récolte agricole (10) lorsqu'il est actionné.

13. Machine de récolte agricole (10) selon la revendication 1, dans laquelle Machine de récolte agricole (10) est une moissonneuse-batteuse (10).

14. Procédé pour faire fonctionner une machine de récolte agricole (10), la machine de récolte (10) comportant un châssis (12), un caisson d'alimentation (20) monté de façon pivotante sur le châssis (12), et un ensemble d'essieu (80) monté sur le caisson d'alimentation (20) et incluant une roue (88), le procédé comprenant les étapes consistant à :
actionner sélectivement un commutateur de mode route (108) entre un mode de champ et un mode de route, le commutateur de mode route (108) délivrant un premier signal de sortie indiquant un mode de champ et un second signal de sortie indiquant un mode de route, et
commander un déploiement de l'ensemble d'essieu (80) en faisant pivoter l'ensemble d'essieu (80) d'une position de champ jusqu'à une position de transport au moyen d'un actionneur hydraulique (98), lorsque le commutateur de mode route (108) est actionné en mode route, au moyen de quoi l'actionneur hydraulique (98) fournit une force exercée vers le bas sensiblement constante entre la roue (88) et la surface du sol (118).

15. Procédé selon la revendication 14, dans laquelle l'actionneur hydraulique (98) est couplé fluidiquement à un accumulateur hydraulique (110), et le déploiement commandé de l'ensemble d'essieu (80) comprend une séquence de déploiement comportant les opérations consistant à :
lever le caisson d'alimentation (20) jusqu'à une position prédéterminée,
commander l'actionneur hydraulique (98) pour pivoter la roue (88) vers le bas vers la surface du sol (118),
fermer fluidiquement l'actionneur hydraulique (98) et l'accumulateur (110) à une pression sensiblement identique entre eux, et
abaisser le caisson d'alimentation (20) jusqu'à ce qu'une pression de fluide prédéterminée soit obtenue à l'intérieur de l'accumulateur (110).
